# EUROPEAN PATENT SPECIFICATION

(11) **EP 3 713 851 B1**
(45) Date of publication and mention of the grant of the patent: **08.02.2023**
(21) Application number: 18818988.0
(22) Date of filing: 07.11.2018
(51) Int. Cl.: B65D 85/804

(54) **FLEXIBLE FITMENT ASSEMBLY FOR FOOD OR BEVERAGE CONTAINERS**
FLEXIBLE ANPASSUNGSANORDNUNG FÜR LEBENSMITTEL- ODER GETRÄNKEBEHÄLTER
ENSEMBLE DE RACCORD FLEXIBLE POUR RÉCIPIENTS D'ALIMENTS OU DE BOISSONS

(30) Priority: 23.11.2017 EP 17203196
(43) Date of publication of application: 30.09.2020
(73) Proprietor: Société des Produits Nestlé S.A., 1800 Vevey (CH)
(72) Inventor: PELLEGRINI, Stéphane, 25160 Montperreux (FR)
(74) Representative: Navarro Fernández, Maria Isabel
(86) International application number: PCT/EP2018/080393
(87) International publication number: WO 2019/101512

(56) References cited:
- WO-A1-99/05044
- WO-A1-2011/054402
- WO-A1-2016/023728
- WO-A1-2017/137286
- JP-A- H04 364 819

## Description

### Field of the invention

The present invention relates to a fitment assembly configured flexibly moveable for being used with food or beverage containers; in particular the invention relates to a fitment assembly that can move and adopt different orientations or positioning within the food or beverage container.

### Background of the invention

Preparing beverages by introducing a capsule containing a food or beverage ingredient, such as ground coffee or instant coffee, in a beverage dispensing machine and injecting water into the capsule is known in the state of the art: the beverage or food ingredient is typically extracted or dissolved into water to form the beverage or the desired final product, which flows out of the capsule through a suitable outlet.

As such, different capsules have been developed in the past, these capsules being at least differentiated by the nature of the capsule body used for storing the food or the beverage ingredient. While most of the capsules are made of a rigid body or semi-rigid body, typically made though injection moulding or thermoforming, flexible types of packs can be made out of foil materials. Flexible packs have generally the advantage to semi-rigid and rigid capsules that less amount of material is used to pack the product which leads to overall less production cost, to lower life cycle impact shown in several life-cycle assessments and to advantages on the part of the user, who will need less available space for storing these packs, as they are more compact.

It is known in the state of the art, for example as per document WO 99/05044, a flexible beverage-producing sachet comprising a beverage ingredient in a volume formed by bonding two laminates at their edges, having a base seam into which a conduit of rigid plastics is bonded. An inlet nozzle is provided at the top of the resulting sachet for introducing water that is mixed with the beverage or food ingredient inside the inner volume of the sachet, the beverage produced being then evacuated through a beverage outlet arranged at the bottom of the pack, where closing means are provided, such that the closing means are adapted to open under pressure when pressurized water is introduced into the sachet, allowing the beverage to evacuate through the beverage outlet. However, this configuration presents important drawbacks for the consumer: the opening of the closing means is obtained by increase of pressure inside the sachet. Yet this pressure increase is not recommended for the preparation of some beverages because it creates bubbles at the surface of the beverage, for example this would not be desired for the preparation of tea. Besides, there exists the risk for the user that the packages may not rupture at the desired pressure, and that they would finally open up in an uncontrollable explosion. For this reason the apparatus where the sachet is processed needs to comprise means for totally enclosing the sachet in the machine during beverage preparation in order to avoid damages for the consumer. Such flexible beverage-producing sachets as described do not therefore allow a proper control of the insertion of water in the inner volume, and neither a proper control of the outlet for delivering the beverage prepared inside. Therefore, it would be desirable to have a flexible sachet that allows this specific and good regulated control of the inlet and of the outlet parts. Another example of such a sachet is disclosed in WO2011/054402 A1.

Another drawback of these known sachets is that the inlet nozzle introduces water in the pack always according to the same vertical top-down orientation in the sachet. Therefore, all the beverages are produced according to the same process inside the sachet. Yet depending on the nature of the beverage ingredient and the desired beverage the beverage ingredient should be processed differently. It would thus also be very advantageous to provide a sachet where the inlet of the fluid and the outlet of the prepared beverages are differently configured according to the type of product or beverage that is prepared inside.

Other problems of existing pouches in the state of the art are for example that, when having a powder ingredient in its inner volume that is diluted or processed in order to prepare an appropriate beverage, sometimes powder starts to be dispensed without the product having been properly prepared or diluted: avoiding this would also be a main advantage of a sachet or pouch.

Another disadvantage of existing pouches or sachets is that, when the food product or beverage has been prepared and the sachet is removed from the machine, in most of the cases, because the outlet through which the product is dispensed still remains open, dripping of the remaining product inside occurs.

Therefore, it would be desirable to provide a flexible pack for preparing food or beverage products which addresses the problems and drawbacks in the state of the art.

The present invention comes to provide a solution to the above-described needs, as it will be further explained. The invention also aims at other objects and particularly at the solution of other problems as will appear in the rest of the present description.

### Summary of the invention

According to a first aspect, the invention relates to a fitment assembly for one or a plurality of food or beverage containers, each container comprising at least one ingredient for the preparation of a food or beverage product: the fitment assembly comprises at least one fluid inlet communicating with at least one injection hole through which a fluid can be supplied into the food or beverage container, and at least one dispensing outlet through which the food or beverage product is dispensed. The fitment assembly of the invention comprises two parts relatively moveable with respect to each other such that this relative movement opens or closes the communication of the inner volume of the container with the fitment assembly and/or further opens or closes the communication of the dispensing outlet with the exterior of the fitment assembly, the two parts being relatively moveable both transversally and vertically.

Preferably, in the fitment assembly of the invention, a transversal force applied to compress it substantially transversally is converted into a substantially and opposed vertical movement of the two parts of the fitment assembly.

Typically, the relative movement of the two parts of the fitment assembly of the invention is synchronized.

In a preferred embodiment, the fitment assembly comprises at least one arm, preferably four arms, each of them joined to the rest of the fitment by means of at least two pivoting points.

Preferably, the fitment assembly of the invention comprises two fluid inlets symmetrically arranged within the assembly each supplying a fluid into the food or beverage container by a corresponding injection hole, sequentially and/or simultaneously actuated as a function of the type of product prepared.

Typically, the fitment assembly is configured for injecting a high velocity jet into the one or plurality of containers through the at least one injection hole. Preferably, the fluid inlet or inlets are reversibly positioned.

The fitment assembly of the invention preferably further comprises at least one positioning hole to guide the movement of the two parts of the fitment assembly with respect to each other.

Typically, in the fitment assembly of the invention, the dispensing outlet is configured partially in one of the moveable parts and partially in another one of the moveable parts, at least one of these parts comprising a tearable element.

According to a second aspect, the invention relates to a pack comprising a fitment assembly as the one described and at least one food or beverage container to which the fitment assembly is attached.

Preferably, in the pack of the invention, the food or beverage containers are configured by a flexible cover overwrapping the fitment assembly in its entirety, except for the part of it in communication with the inner volume of the food or beverage container or containers.

Typically, the pack according to the present invention further comprises identification means with the information for processing the ingredients inside the one or plurality of containers such as temperature, flow and/or volume of the fluid introduced, preparation time, sequence of movements of the parts in the fitment assembly, for example.

Yet according to a third aspect, the invention refers to machine for preparing a food or beverage product from a pack as the one described, the machine comprising means designed for engaging with the fitment assembly and injecting a fluid through the at least one fluid inlet and means for engaging with the at least one positioning hole.

Preferably, in the machine of the invention, the means engaging with the at least one fluid inlet and/or the means engaging with the at least one positioning hole are configured to move the two parts of the fitment assembly with respect to each other.

Typically, the machine according to the present invention is configured to receive a pack as described in an essentially vertical position, injecting fluid into it in an upward direction.

Preferably, the machine of the invention further comprises control means to control the processing the ingredients inside the one or plurality of containers such as temperature, flow and/or volume of the fluid introduced, preparation time, sequence of movements of the parts in the fitment assembly, for example.

### Brief description of the drawings

Further features, advantages and objects of the present invention will become apparent for a skilled person when reading the following detailed description of non-limiting embodiments of the present invention, when taken in conjunction with the appended drawings, in which:
Fig. 1 shows a general configuration of a food or beverage pack according to the present invention.
Fig. 2 shows a representative embodiment of a flexible fitment assembly according to the present invention.
Figs. 3a-d show how a flexible fitment assembly is configured, according to the present invention.
Fig. 4 shows the elements configuring a flexible fitment assembly according to the present invention.
Fig. 5a shows how the two parts configuring a flexible fitment assembly according to the invention are mounted.
Fig. 5b shows a flexible fitment assembly according to the present invention in an initial closed position, before the food or beverage is prepared.
Fig. 5c shows a flexible fitment assembly according to the present invention in a final open position, when the food or beverage is prepared and is being dispensed.
Fig. 6a shows in detail the configuration of a flexible fitment assembly according to the present invention.
Fig. 6b shows a detail of the flexible fitment assembly of Figure 6a, showing the inner aperture, communicating with the inner volume of a pack container.
Fig. 6c shows a detail of the flexible fitment assembly of Figure 6a, showing the frontal configuration of the assembly.
Fig. 7 shows a detailed overview of a flexible fitment assembly according to the invention.
Fig. 8a shows the flexible fitment assembly of Figure 7 in an open position, allowing the dispensing of the food or beverage.
Fig. 8b shows a frontal view of the flexible fitment assembly of Figure 8a in an open position, allowing the dispensing of the food or beverage.
Fig. 8c shows a top view of the flexible fitment assembly of Figure 7 in a closed position, closing the exit of the food or beverage product inside the pack container.
Fig. 9a shows an overview of a flexible fitment assembly according to the invention, in an initial closed position.
Fig. 9b shows the flexible fitment assembly of Figure 9a, in an intermediate position.
Fig. 9c shows the flexible fitment assembly of Figure 9c, in a final open position, ready for dispensing of a food or beverage product.

### Detailed description of exemplary embodiments

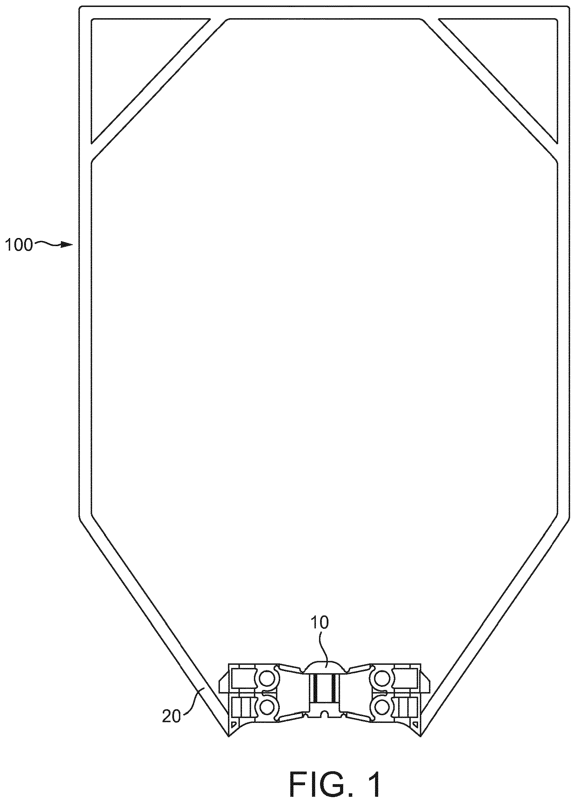

According to a first aspect, the present invention relates to a fitment assembly 10 for being used with at least one food or beverage container 20 as shown schematically in Figure 1: the assembly of the fitment assembly 10 and the container 20 configures a food or beverage pack 100.

The fitment assembly 10 will be described in more detail: it is configured as a flexible fitment, moveable to adopt different orientations or positioning within the food or beverage container 20.

This container 20 comprises at least one ingredient for the preparation of food or beverage product. When more than one container is used, typically each container comprises a different product or ingredient such that they are mixed in order to obtain a more complex product or beverage recipe preparation. The content of the containers can then be either sequentially or simultaneously prepared and dispensed through the fitment assembly 10.

According to the present invention the food or beverage ingredient of the container can be comprised within the list of: soups, fruit juices, vegetable juices, bouillons, coffee, chocolate, tea, milk or creamer, smoothies, purees, coulis, creams or a combination thereof. The food or beverage ingredient can be a soluble food or beverage ingredient. Preferably the food or beverage ingredient is a soluble food or beverage ingredient selected in the list of:
- instant coffee powder, milk powder, cream powder, instant tea powder, cocoa powder, soup powder, fruit powder or mixture of said powders,
- a coffee concentrate, a milk concentrate, a syrup, a fruit or vegetable concentrate, a tea concentrate, a fruit or vegetable puree.

The powders can be agglomerated or sintered. The powders or liquid concentrates can be mixed with solid pieces for example for preparing soups with solid pieces. The food or beverage ingredient can also be an infusable food or beverage ingredient like a roast and ground coffee or tea leaves. In that embodiment water extracts the infusable ingredient.

In the present invention fluid covers any aqueous diluent that can be mixed with a soluble beverage ingredient to prepare a beverage, like water, carbonated water, milk, etc. However, according to the invention, water is the preferred fluid which will be used.

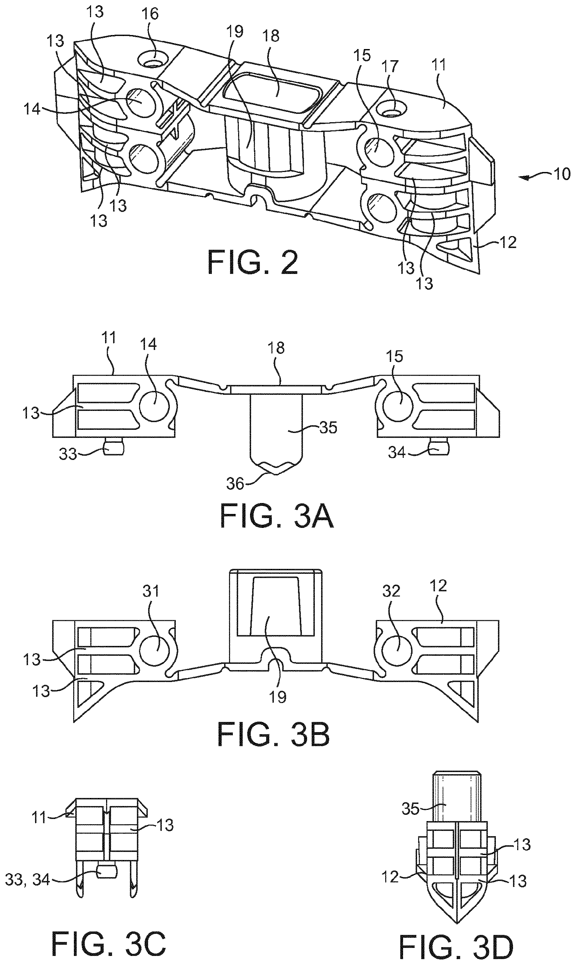

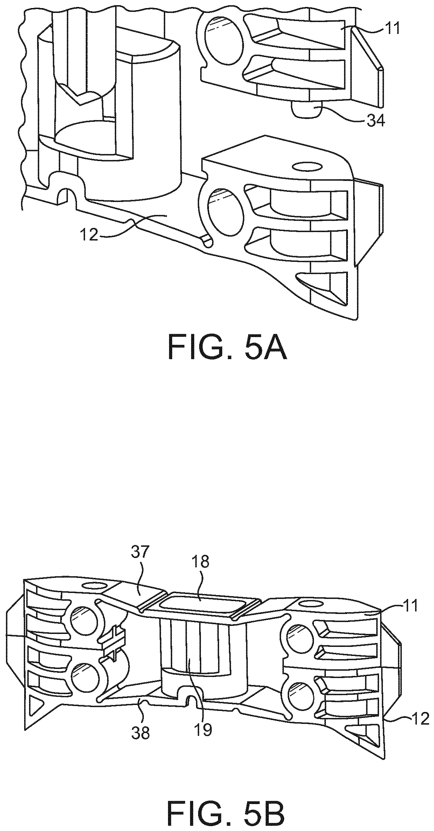

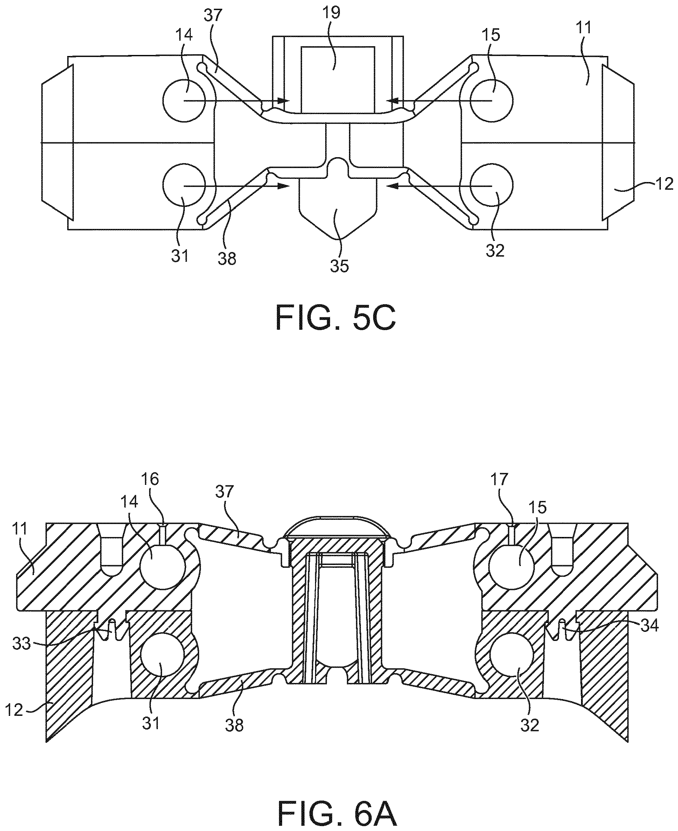

Looking at Figure 2, the flexible fitment assembly 10 of the invention is preferably configured by two parts 11 and 12, joined together or it can also be configured directly in one single piece. Typically, the flexible film configuring the container 20 is arranged overwrapping the fitment assembly 10 in its entirety, expect for the part of it in communication with the inner volume of the container 20 (as represented in Figure 1). For a better adhesion of the film over the fitment 10, this fitment is typically provided with a certain number of ribs 13, as shown in Figure 2. According to a possible embodiment, the fitment assembly 10 will comprise two fluid inlets 14 and 15, preferably symmetrically arranged. Each fluid inlet will communicate with the inner volume of the container 20 through an injection hole 16, 17, respectively. Piercing and injecting means in a food and beverage machine (not shown) operating the pack 100, preferably configured as a needle, will pierce the film over the inlet 14 and/or 15, and will then inject a fluid, typically water. The machine will also come and connect with the fitment assembly 10 through positioning holes 31, 32 (see Figure 3b). Therefore, the machine will connect the fitment 10 in the fluid inlets 14 and 15 and also in the positioning holes 31, 32: the machine will move transversally towards the center of the fitment 10 its two parts 11 and 12, compressing simultaneously the two parts in transversal direction and thus modifying the communication with the inner volume of the container and with the exterior of it. Looking at Figures 3a and 3b, it is shown that the coupling of the two parts 11 and 12 configuring the fitment 10 is effected by means of mounting pins 33 and 34. The movement of the primary and secondary parts 11 and 12 of the fitment 10 is represented in Figure 5c, shown by substantially horizontal arrows. The fitment 10 comprises flexible upper and lower fitment elements 37 and 38, respectively (also called pivotable elements; each of them can pivot around two pivot points). These elements are each joined to the rest of the assembly by means of two pivot points so that the transversal movement (compression towards the center) of the fitment 10 (of its parts 11 and 12) pivots these elements 37 and 38. The transversal length of the fitment 10 will also be slightly diminished by the movement of the elements 37 and 38. In fact, these elements are attached by means of pivot points 40, 40', 40" and 40‴ and similarly 50, 50', 50" and 50‴. These pivot points are flexible and made of a lower rigidity than that of the rest of the material of the fitment assembly 10, therefore by the transversal movement of the fitment these pivot points are flexed and compressed so the length of the fitment diminishes.

Preferably, fluid is injected through the fluid inlets 14, 15 at a pressure higher than 2 bars, more preferably higher than 3 bars, preferably comprised between 2 and 10 bars, more preferably of around 7 bars. The fluid inlets are configured in such a way that the high pressure fluid injected through them by the injecting and piercing means in the machine is converted into a high velocity jet, which is driven into the container or containers. Typically, the diameter of the fluid inlet is comprised between 1 mm and 4 mm, more preferably between 1.5 mm and 3 mm. The fluid inlets are each communicated with the inside volume of the container through respective injection holes 16, 17 having a diameter of at most 1 mm, preferably of at least 0.24 mm, preferably comprised between 0.3 mm and 1 mm, preferably between 0.3 and 0.5 mm, more preferably of about 0.4 mm. With such a configuration, when high pressure fluid is injected by the injecting and piercing means through the fluid inlets is conveyed internally towards the injection holes, from which it is converted into high velocity jets of fluid injected inside the container 20 when passing through the small section injection hole. Typically, this jet of fluid provided in the container has a velocity of at least 20 m/s preferably at least 30 m/s. Even when the Figures show embodiments of a fitment assembly 10 comprising two fluid inlets and two injection holes, it is also possible according to the invention to have fitments 10 with only one fluid inlet, for example, connected to a corresponding injection hole, with the inner volume of the container, so only one fluid jet will be created inside of it.

According to the invention, the fluid inlets are configured for providing orientable high velocity jets into the container, preferably at about 90° with respect to the fluid supply provided by the injecting and piercing means of the machine, though any other angle would be possible and comprised within the scope of the present application.

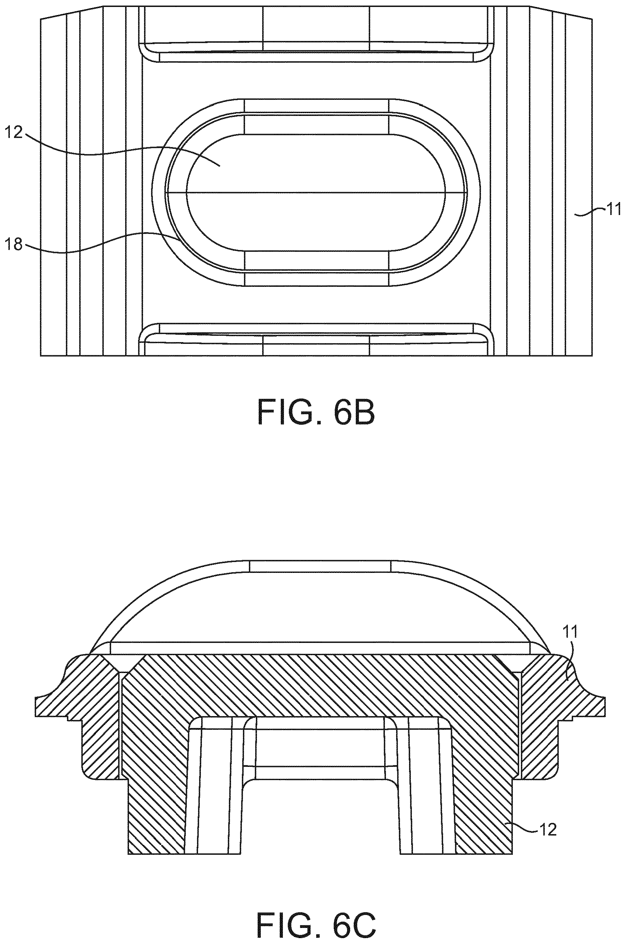

By fluid jet it is understood a stream of liquid or fluid that comes out of the injection hole and into the inner volume of the food or beverage container quickly and with force. As previously described, such a configuration is preferably obtained in the present invention by placing a constriction (that of the injection holes) in the fluid path in the fluid inlets to reduce the size of the section of the fluid inlets. Due to the small surface of the injection holes through which the fluid goes into the inner volume of the container 20, the pressurized fluid creates a jet in the inner volume of the container. A detail on how the injection holes are configured with respect to the fluid inlets can be seen in Figure 6a, for example.

For the same fluid to be provided through the fluid inlets, the surface of the injection holes can vary according to the nature of the food and beverage ingredient inside the container which is to be mixed with the fluid. In particular when the ingredient is difficult to dissolve a smaller injection hole creates a jet with a higher velocity which improves agitation and dissolution of this ingredient in the container.

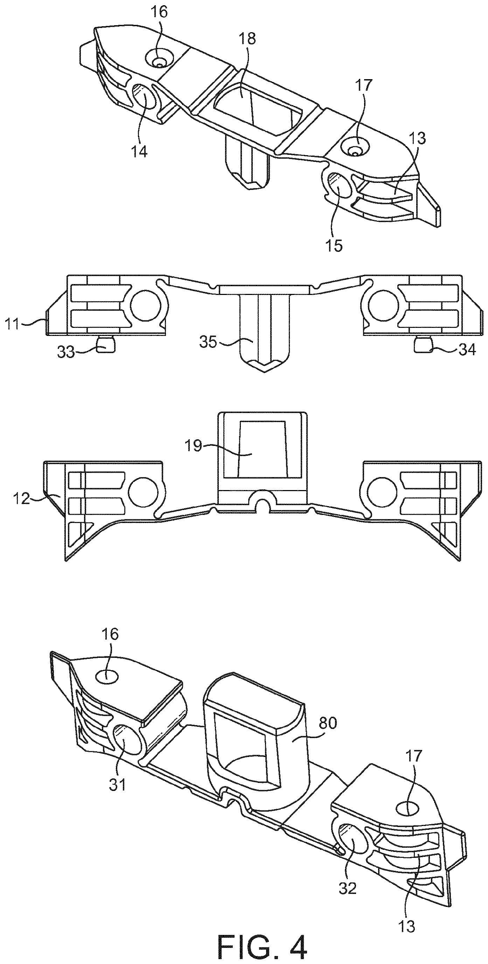

Figure 4 shows also further details of the internal configuration of a flexible fitment assembly 10 according to the invention. The food or beverage prepared is delivered through an outlet conduit 35 in the primary part 11 and guided also by the secondary part 12. Therefore, the outlet is partially configured by the element 35 in the primary part 11 and by the element 80 in the secondary part 12 (see Figure 4): when the elements 37 (two in the upper part or in the primary part 11) and the elements 38 (two in the lower part or secondary part 12) pivot, and outlet channel is configured by the outlet conduit 35 further guided by part 80.

The fitment assembly 10 can be injected in two parts 11 and 12 that will be later joined by mounting pins 33, 34 or it can be directly injected in one single piece, still comprising two parts, 11 and 12, as we defined previously.

Looking at Figure 5a, it is shown the connection by clipping of the primary and secondary parts. 11 and 12, by mounting pins 33 and 34 (in this case, only one part, pin 34, is shown).

The flexible fitment assembly 10 of the invention can also be provided with frontal and rear fluid inlets, 14 and 15 and on the rear side of the fitment (not shown) that will allow injecting a fluid reversibly and independently on the way the pouch is arranged in the machine. One single fluid inlet in the fitment is also a possible embodiment.

The food or beverage product is delieverd from the pack 100 by means of an outlet conduit 35, as a free flow, meaning that the product can flow by simple gravity fall. The outlet conduit 35 is typically configured as a straight channel or conduit oriented essentially vertically in the fitment assembly 10. An advantage of the configuration of the invention is that there is no need to implement a particular connection from the outlet and the machine when a beverage is for example produced, in order to direct the flow of the beverage delivered: the beverage can flow from the outlet conduit 35 (the conduit will also be guided by the part 80) directly into a drinking cup.

The fitment assembly 10 is preferably rigid and is made of a rigid plastic material, preferably by injection moulding. Typically, this plastic material can be selected from the following: polypropylene, polyethylene, polyethylene terephthalate and polylactic acid. Also according to a less preferred embodiment the fitment assembly 10 can be made of a metal like aluminium or tin-plate. The fitment assembly 10 will typically be moveable with a transversal force of about 25 N.

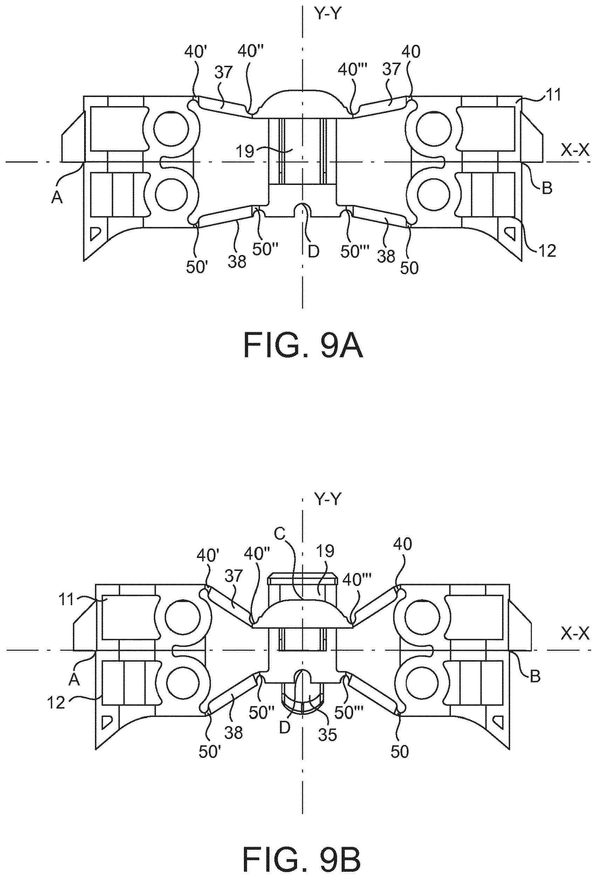

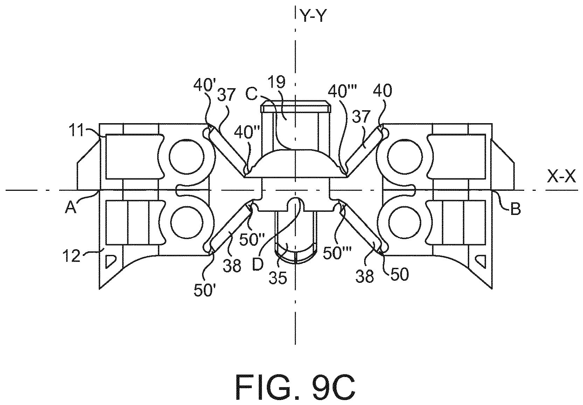

The way the flexible fitment assembly 10 of the invention works is shown in Figures 9a, b and c and will be explained in detail in what follows.

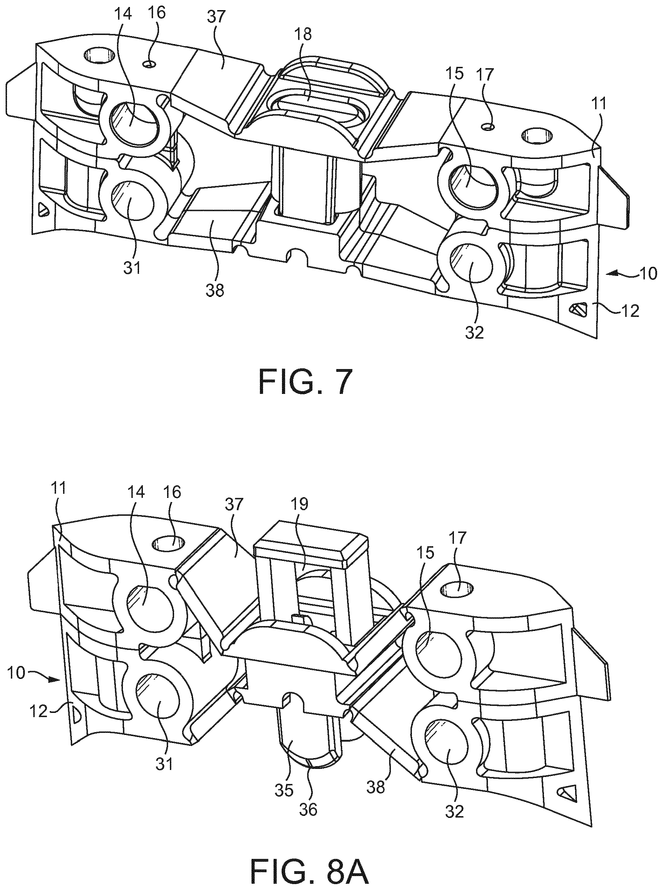

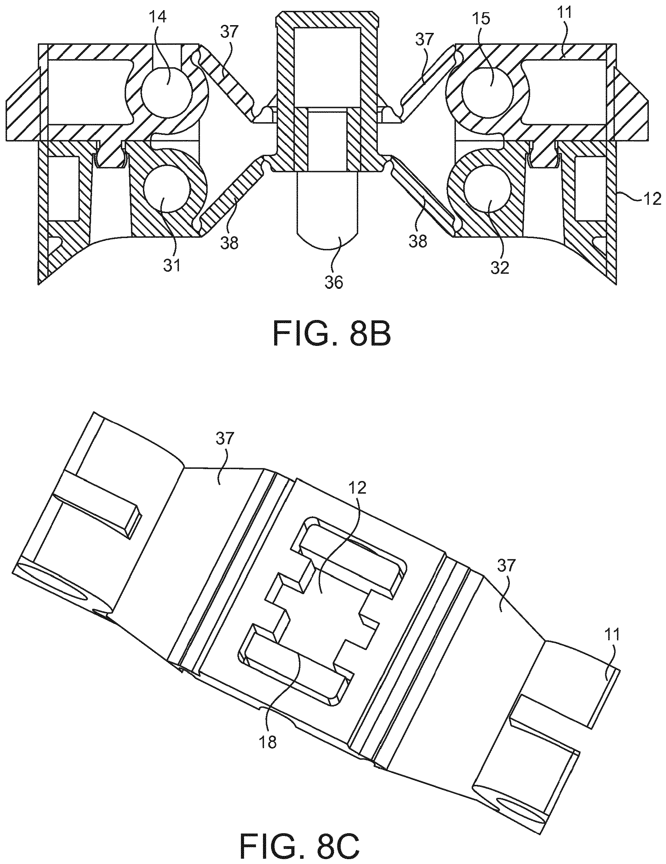

Figure 9a shows the flexible fitment assembly 10 in an initial position, when the pack 100 has not been inserted yet in a beverage preparation machine or when the beverage has already been prepared and the spout is once again closed so as to avoid any dripping of the product when removing the pack from the machine. The flexible upper spout elements 37 and the flexible lower spout elements 38 are in their initial position, and have not yet moved. An inner closing aperture 18 communicating with the inner volume of the container 20 is closed by the configuration of the secondary part 12 arranged at a rest position with respect to the primary part 11, as shown in Figure 7 or in further top detail in Figure 8c.

The flexible upper spout elements 37 and the flexible lower spout elements 38 are configured having a main arm (rigid arm) joined to the rest of the fitment assembly by means of two pivot points each (40 and 40‴; 40' and 40"; 50 and 50‴; 50' and 50").

The needle or piercing and injecting means from the beverage preparation machine come pierce the flexible sheet covering the fluid inlets, primary fluid inlet 14 and secondary fluid inlet 15. They are configured shaped as a kind of a fork with two elements piercing and connecting in the inlets 14 and 15, in the primary part 11. Another positioning element in the beverage preparation machine comes to pierce and connect in the positioning holes 31 and 32 of the secondary part 12: this positioning element of the machine will also be configured as a fork or the like. The piercing and injecting means will pierce and further inject a fluid (typically water) through the inlets 14 and 15 and into the inner volume of the container 20 through the primary and secondary injection holes 16 and 17. Further, this piercing and injecting means will transversally move (horizontally towards the centre, as represented by arrows in Figure 5c) the primary part 11 of the fitment 10. The other positioning element in the machine connecting with the positioning holes 31, 32 will similarly come to move transversally (horizontally towards the centre, as represented by arrows in Figure 5c) the secondary part 12 of the fitment 10. The two parts, 11 and 12, will move transversally towards the centre preferably simultaneously (i.e. the two upper elements 37 and the two lower elements 38 will move substantially simultaneously). By this movement, they make the arms 37 and 38 pivot around the pivot points (which are more flexible). For example, looking at any of the upper elements 37 in the primary part 11, when the piercing and injecting means connect in the inlets 14 and 15, the part 11 is moved towards the centre of the fitment, pivoting the elements 37 and further compressing the pivot points 40 and 40"', 40' and 40". Therefore, the upper elements 37, starting from an initial position as shown in Figure 9a, go to an intermediate position as in Figure 9b and then into a final position 9c. In a similar way, and preferably substantially simultaneously, the secondary part 12 of the fitment is moved transversally towards the centre by a positioning element in the machine (through the positioning holes 31, 32) pivoting the lower elements 38 and further compressing the pivot points 50 and 50‴, 50' and 50".

The configuration of the fitment of the invention allows to compress the fitment in one direction (transversal) and to originate a movement in a direction perpendicular to that of the compression (i.e. in the vertical direction), allowing opening or closing the communication of the inner volume of the container with the fitment assembly and/or further opens or closes the communication of the outlet conduit with the exterior of the fitment assembly. When looking at Figures 9a to 9c, a compression force applied transversally in axis X-X will move points A and B substantially horizontally towards the center of the fitment. This compression will originate the pivoting of the elements 37 and 38 around pivot points 40, 40', 40", 40‴, 50, 50', 50" and 50‴ that will make the points C and D move vertically, typically in opposing direction, approaching each other.

For correctly moving the fitment of the invention, a preferred embodiment provides four anchorage points in the fitment assembly 10 with respect to the dispensing device: primary and secondary inlets 14, 15 and positioning holes 31, 32. The device will move the fitment substantially transversally (compression) through acting on these four points (typically by means of fork-type arrangements). Different configurations with different anchorage points are also possible.

The movement of the elements 37 and 38 in the primary and secondary parts 11 and 12, respectively, allows to go from an initial position (Figure 9a) where a fluid can be injected through the inlets 14 and 15 into the inner volume of the container 20, to dissolve a product inside (typically a powder) in order to prepare a food or beverage product. During preparation, and until dissolution has been correctly done, the communication of the inner volume of the container 20 to the outside of the pack 100 is closed by the inner closing aperture 18: the position of the secondary part 12 with respect to the primary part 11 avoids any product being dispensed.

Once the dissolution is done and the product inside is ready to be dispensed, the elements 37 and 38 pivot (intermediate position as per Figure 9b and into a final position as per Figure 9c) where the communication of the inner volume of the container 20 is opened through an outlet side aperture 19 (opened in intermediate and final positioning, Figures 9b and 9c, respectively): the product or beverage prepared inside the container 20 goes through the outlet side apertures 19 (frontal and rear, typically), into the outlet conduit 35 (surrounded by the and delivered out of the pack 100, into a cup or similar recipient. The primary part 11 comprises, in the edges of the outlet conduit 35, a tearing part 36, configured sharp to be able to tear open the flexible film overwrapping the lower part of the fitment assembly 10. Therefore, when the elements 37 and 38 move, the upper elements 37 move downwards and so also move downwards the outlet conduit 35: in this downwards movement, the tearing part 36 tears open the flexible film overwrapping the lower part of the fitment 10 (lower part of the outlet conduit 35), leaving open and with free access out for delivering the food or beverage prepared.

The present invention also allows controlling different configurations, from an initial closed one (Figure 9a) towards a final opened one (Figure 9c), passing through multiple intermediate ones (opening to higher or lower extent the outlet side aperture 19 and allowing tearing completely open the outlet conduit 35 or to different extent), of the flexible fitment assembly 10. By this, the preparation of the beverage and the dispensing can be controlled and regulated (preferably with identification means in the pack 100 read and performed by a corresponding control unit in the beverage dispensing machine).

Typically, when the dispensing of the food or beverage from the pack 100 has ended, the flexible fitment assembly 10 goes back to its initial position (as per Figure 9a) so the communication from the inside of the container 20 to the outside of it is closed: this avoids any dripping when the pack 100 is removed from the preparation machine.

Typically, the interface of the pack 100 with the beverage preparation and dispensing machine is the fitment assembly 10: thus, different sizes of the pack 100 can be used in a same machine adapted to store different quantities of ingredients: the fitment 10 remain unchanged and it is the size of the container 20 the one that changes (typically its height). As a consequence, it becomes possible to produce different products, such as for example a cup of espresso coffee or a bowl of soup. The external design and configuration of the fitment assembly 10 will remain unchanged independently on the product targeted; however, the internal design of the fitment assembly 10, in particular as to the diameter of the injection hole or holes can differ as a function of the ingredient to be processed and therefore as a function of the food or beverage product targeted. Also, other parameters such as the flow rate of fluid injected and/or the temperature of the fluid injected and/or the total volume of fluid injected, will be modified as a function of the ingredient to be processed and therefore as a function of the food or beverage product targeted.

The food or beverage container 20 configuring the pack 100 preferably comprises two flexible water impermeable sheets joined to one another to define an inner volume where at least one ingredient is stored. Preferably, the food or beverage container presents an essentially plane shape, wherein the fitment assembly 10 is arranged on one of the sides of the pack 100, as schematically represented in Figure 1. Preferably the pack itself is substantially flexible and looks like a pouch or sachet. By flexible, it is meant that the sheets can be bent easily. The resulting pack 100 can be bent also, as being soft and can be deformed contrary to rigid containers. The flexible sheet material can be plastic laminates, metallised foil or alufoil or fibre base material. According to the invention the two flexible water impermeable sheets can be formed of one single flexible water impermeable sheet folded in half and joined at its free edges.

Typically, the two flexible water impermeable sheets joined to one another to define the inner volume of the container are formed of one single flexible water impermeable sheet folded in half and joined at its free edges. According to said mode the container is a plane pouch made of a flexible material sheet, said sheet being folded at the top of the container and bonded on its edges to define the inner volume, the bottom bonded edge typically including the fitment assembly 10. This embodiment constitutes a particularly easy way to manufacture the pack 100 comprising the container and the fitment assembly since it requires the cutting of only one piece of sheet - most preferably according to a rectangular shape - and its folding to create the inner volume for the food or beverage ingredient. Typically, also for manufacturing convenience, the fitment assembly 10 is introduced in the bottom edge of the container during the sealing of its edges.

According to the invention, either the fitment assembly 10 and/or the food or beverage container 20 preferably comprise identification means (not shown) which comprise the information for the processing of the ingredients inside the container 20 and provide this information to appropriate control means in the machine. As already mentioned, this information can comprise for example the parameters in the preparation process, such as: temperature of the fluid introduced, flow and total volume of the fluid, preparation time, sequences of movement of the elements 37 and 38 in the fitment assembly, etc. The elements 37, 38 can also be called arms (in fact there will be four of these arms typically, as represented in the accompanying figures), and each of these arms will be joined to the rest of the fitment structure by typically two pivoting points, 40, 40', 40‴, 40‴; 50, 50', 50", 50‴.

These identification means can comprise any kind of recognition means such as, for example, mechanical codes, optical codes, RFID tags, bar codes, magnetic codes, or the like. These identification means can also be made as detection holes arranged for example on one lateral edge of the food or beverage container, configured by the two flexible sheets brought together to conform the pouch or container, preferably on the sealing area of the container, where there is no product or ingredient.

Preferably, according to the invention, the pack 100 presents a plane shape oriented along a plane essentially vertically oriented during beverage production and the fluid inlet orientates the jet of fluid in a direction comprised in said plane. The fluid jet introduced from the bottom into the container is developing into circular and spiral movements creating turbulences, frictions and high contact surfaces between the fluid molecules (typically, water molecules) and the ingredient particles. In average the fluid molecules have several turns within the container until they leave it together with the beverage or food product once mixed. Best results (reconstitution) have been observed with a pack of rectangular shape. With this configuration, the food or beverage obtained is provided with a good foaming.

According to the invention, the food or beverage container is arranged essentially vertically during the production and dispensing of the product or beverage, and the fitment assembly 10 is arranged in such a way that the fluid coming through the fluid inlet 12 is supplied into the container 20 in an upward direction.

The fitment assembly of the invention allows the combination of multiple functions: opening of the outlet conduit controlled by the preparation machine, anti-dripping after extraction of the food or beverage, tightness guaranteed while the machine opens or closes the outlet conduit. Also, the height of the fitment remains relatively low and within small dimensions which allows cost effectiveness. Also, the opening and closing of the fitment assembly is controlled and thus minimizes the risk of any leakage between the pack and the machine.

## Claims

1. A fitment assembly (10) for one or a plurality of food or beverage containers (20), each container comprising at least one ingredient for the preparation of a food or beverage product, the fitment assembly (10) comprising
at least one fluid inlet communicating with at least one injection hole through which a fluid can be supplied into the food or beverage container, and
at least one dispensing outlet through which the food or beverage product is dispensed;
the fitment assembly (10) comprising two parts relatively moveable with respect to each other such that this relative movement opens or closes the communication of the inner volume of the container with the fitment assembly (10) and/or further opens or closes the communication of the dispensing outlet with the exterior of the fitment assembly;
**characterized in that** that the two parts are relatively moveable both transversally and vertically.

2. A fitment assembly (10) according to claim 1 wherein a transversal force applied to compress substantially transversally the fitment assembly (10) is converted into a substantially and opposed vertical movement of the two parts of the fitment assembly (10).

3. A fitment assembly (10) according to any of the previous claims wherein the relative movement of the two parts is synchronized.

4. A fitment assembly (10) according to any of the previous claims wherein it comprises at least one arm, preferably four arms, each of them joined to the rest of the fitment by means of at least two pivoting points.

5. A fitment assembly (10) according to any of the previous claims wherein it comprises two fluid inlets symmetrically arranged within the assembly (10) each supplying a fluid into the food or beverage container by a corresponding injection hole, sequentially and/or simultaneously actuated as a function of the type of product prepared.

6. A fitment assembly (10) according to any of the previous claims configured for injecting a high velocity jet into the one or plurality of containers through the at least one injection hole.

7. A fitment assembly (10) according to any of the previous claims wherein the fluid inlet or inlets are reversibly positioned.

8. A fitment assembly (10) according to any of the previous claims further comprising at least one positioning hole to guide the movement of the two parts of the fitment assembly with respect to each other.

9. A fitment assembly (10) according to any of the previous claims wherein the dispensing outlet is configured partially in one of the moveable parts and partially in another one of the moveable parts, at least one of these parts comprising a tearable element.

10. A pack (100) comprising a fitment assembly (10) according to any of the previous claims and at least one food or beverage container (20) to which the fitment assembly (10) is attached.

11. A pack (100) according to claim 10 wherein the food or beverage containers are configured by a flexible cover overwrapping the fitment assembly (10) in its entirety, except for the part of it in communication with the inner volume of the food or beverage container or containers.

12. A pack (100) according to any of claims 10-11 further comprising identification means with the information for processing the ingredients inside the one or plurality of containers (20) such as temperature, flow and/or volume of the fluid introduced, preparation time, sequence of movements of the parts in the fitment assembly (10), for example.

13. Machine for preparing a food or beverage product from a pack (100) according to any of claims 10-12, the machine comprising means designed for engaging with the fitment assembly (10) and injecting a fluid through the at least one fluid inlet and means for engaging with the at least one positioning hole.

14. Machine according to claim 13 wherein the means engaging with the at least one fluid inlet and/or the means engaging with the at least one positioning hole are configured to move the two parts of the fitment assembly with respect to each other.

15. Machine according to any of claims 13-14 configured to receive a pack (100) according to any of claims 10-12 in an essentially vertical position, injecting fluid into it in an upward direction.

16. Machine according to any of claims 13-15 further comprising control means to control the processing the ingredients inside the one or plurality of containers (20) such as temperature, flow and/or volume of the fluid introduced, preparation time, sequence of movements of the parts in the fitment assembly (10), for example.

## Patentansprüche

1. Anpassungsanordnung (10) für ein oder eine Vielzahl von Lebensmittel- oder Getränkebehälter (20), wobei jeder Behälter mindestens einen Inhaltsstoff zur Zubereitung eines Lebensmittel- oder Getränkeprodukts umfasst, wobei die Anpassungsanordnung (10) umfasst
mindestens einen Fluideinlass, der mit mindestens einem Einspritzloch kommuniziert, durch das ein Fluid in den Lebensmittel- oder Getränkebehälter zugeführt werden kann, und
mindestens einen Abgabeauslass, durch den das Lebensmittel- oder Getränkeprodukt abgegeben wird;
wobei die Anpassungsanordnung (10) zwei Teile umfasst, die in Bezug zueinander relativ beweglich sind, so dass diese Relativbewegung die Kommunikation des Innenvolumens des Behälters mit der Anpassungsanordnung (10) öffnet oder schließt und/oder die Kommunikation des Abgabeauslasses mit der Außenseite der Anpassungsanordnung weiter öffnet oder schließt,
**dadurch gekennzeichnet, dass** die beiden Teile sowohl transversal als auch vertikal relativ beweglich sind.

2. Anpassungsanordnung (10) nach Anspruch 1, wobei eine Transversalkraft, die ausgeübt wird, um im Wesentlichen transversal die Anpassungsanordnung (10) zu komprimieren, in eine im Wesentlichen und gegenüberliegende vertikale Bewegung der beiden Teile der Anpassungsordnung (10) umgewandelt wird.

3. Anpassungsanordnung (10) nach einem der vorstehenden Ansprüche, wobei die Relativbewegung der beiden Teile synchronisiert ist.

4. Anpassungsanordnung (10) nach einem der vorstehenden Ansprüche, wobei sie mindestens einen Arm, vorzugsweise vier Arme, umfasst, die jeweils mit dem Rest des Passstücks mittels mindestens zwei Schwenkpunkten verbunden sind.

5. Anpassungsanordnung (10) nach einem der vorstehenden Ansprüche, wobei sie zwei Fluideinlässe umfasst, die symmetrisch innerhalb der Anordnung (10) angeordnet sind, die jeweils ein Fluid durch ein entsprechendes Einspritzloch in den Lebensmittel- oder Getränkebehälter zuführen, welche nacheinander und/oder gleichzeitig in Abhängigkeit von der Art des hergestellten Produkts betätigt werden.

6. Anpassungsanordnung (10) nach einem der vorstehenden Ansprüche, die zum Einspritzen eines Hochgeschwindigkeitsstrahls in den einen oder die Vielzahl von Behältern durch das mindestens eine Einspritzloch konfiguriert ist.

7. Anpassungsanordnung (10) nach einem der vorstehenden Ansprüche, wobei der Fluideinlass oder die Fluideinlässe reversibel positioniert sind.

8. Anpassungsanordnung (10) nach einem der vorstehenden Ansprüche, ferner umfassend mindestens ein Positionierungsloch, um die Bewegung der zwei Teile der Anpassungsanordnung in Bezug zueinander zu führen.

9. Anpassungsanordnung (10) nach einem der vorstehenden Ansprüche, wobei der Abgabeauslass teilweise in einem der beweglichen Teile und teilweise in einem anderen der beweglichen Teile konfiguriert ist, wobei mindestens eines dieser Teile ein abreißbares Element umfasst.

10. Packung (100), umfassend eine Anpassungsanordnung (10) nach einem der vorstehenden Ansprüche und mindestens einen Lebensmittel- oder Getränkebehälter (20), an dem die Anpassungsanordnung (10) befestigt ist.

11. Packung (100) nach Anspruch 10, wobei die Lebensmittel- oder Getränkebehälter durch eine flexible Abdeckung konfiguriert sind, welche die Anpassungsanordnung (10) in ihrer Gesamtheit mit Ausnahme des Teils in Kommunikation mit dem Innenvolumen des/der Lebensmittel- oder Getränkebehälter(s) umwickelt.

12. Packung (100) nach einem der Ansprüche 10 bis 11, ferner umfassend Kennzeichnungsmittel mit den Informationen für die Verarbeitung der Inhaltsstoffe in dem einen oder der Vielzahl von Behältern (20), wie beispielsweise Temperatur, Strömung und/oder Volumen des eingeführten Fluids, Zubereitungszeit, Bewegungsabfolge der Teile in der Anpassungsanordnung (10).

13. Maschine zum Zubereiten eines Lebensmittel- oder Getränkeprodukts aus einer Packung (100) nach einem der Ansprüche 10 bis 12, wobei die Maschine Mittel umfasst, die zum Eingreifen in die Anpassungsanordnung (10) und das Einspritzen eines Fluids durch den mindestens einen Fluideinlass und Mittel zum Eingreifen in das mindestens eine Positionierungsloch ausgelegt sind.

14. Maschine nach Anspruch 13, wobei die Mittel, die in den mindestens einen Fluideinlass eingreifen, und/oder die Mittel, die mit dem mindestens einen Positionierungsloch in Eingriff stehen, konfiguriert sind, um die beiden Teile der Anpassungsanordnung in Bezug zueinander zu bewegen.

15. Maschine nach einem der Ansprüche 13 bis 14, die konfiguriert ist, um eine Packung (100) nach einem der Ansprüche 10 bis 12 in einer im Wesentlichen vertikalen Position aufzunehmen, wobei Fluid in eine nach oben gerichtete Richtung eingespritzt wird.

16. Maschine nach einem der Ansprüche 13 bis 15, ferner umfassend Steuerungsmittel zum Steuern der Verarbeitung der Inhaltsstoffe in dem einen oder der Vielzahl von Behältern (20), wie beispielsweise Temperatur, Strömung und/oder Volumen des eingeführten Fluids, Zubereitungszeit, Bewegungsabfolge der Teile in der Anpassungsanordnung (10).

## Revendications

1. Ensemble accessoire (10) pour un ou une pluralité de contenants pour aliments ou boissons (20), chaque contenant comprenant au moins un ingrédient pour la préparation d'un produit alimentaire ou de boisson, l'ensemble accessoire (10) comprenant
au moins une entrée de fluide communiquant avec au moins un trou d'injection à travers lequel un fluide peut être introduit dans le contenant pour aliments ou boissons et
au moins une sortie de distribution à travers laquelle le produit alimentaire ou de boisson est distribué ;
l'ensemble accessoire (10) comprenant deux parties relativement mobiles l'une par rapport à l'autre de sorte que ce mouvement relatif ouvre ou ferme la communication du volume intérieur du contenant avec l'ensemble accessoire (10) et/ou ouvre ou ferme en outre la communication de la sortie de distribution avec l'extérieur de l'ensemble accessoire ;
**caractérisé en ce que** les deux parties sont relativement mobiles à la fois transversalement et verticalement.

2. Ensemble accessoire (10) selon la revendication 1, dans lequel une force transversale appliquée pour comprimer sensiblement transversalement l'ensemble accessoire (10) est convertie en un mouvement sensiblement vertical et opposé des deux parties de l'ensemble accessoire (10).

3. Ensemble accessoire (10) selon l'une quelconque des revendications précédentes, dans lequel le mouvement relatif des deux parties est synchronisé.

4. Ensemble accessoire (10) selon l'une quelconque des revendications précédentes, dans lequel il comprend au moins un bras, de préférence quatre bras, chacun d'eux étant relié au reste de l'accessoire au moyen d'au moins deux points de pivotement.

5. Ensemble accessoire (10) selon l'une quelconque des revendications précédentes, dans lequel il comprend deux entrées de fluide agencées symétriquement à l'intérieur de l'ensemble (10), chacune fournissant un fluide dans le contenant pour aliments ou boissons par un trou d'injection correspondant, actionnées séquentiellement et/ou simultanément en fonction du type de produit préparé.

6. Ensemble accessoire (10) selon l'une quelconque des revendications précédentes, configuré pour injecter un jet à grande vitesse dans le ou la pluralité de contenant à travers l'au moins un trou d'injection.

7. Ensemble accessoire (10) selon l'une quelconque des revendications précédentes, dans lequel la ou les entrées de fluide sont positionnées de manière réversible.

8. Ensemble accessoire (10) selon l'une quelconque des revendications précédentes, comprenant en outre au moins un trou de positionnement pour guider le mouvement des deux parties de l'ensemble accessoire l'une par rapport à l'autre.

9. Ensemble accessoire (10) selon l'une quelconque des revendications précédentes, dans lequel la sortie de distribution est configurée en partie dans l'une des parties mobiles et en partie dans une autre des parties mobiles, au moins l'une de ces parties comprenant un élément déchirable.

10. Emballage (100) comprenant un ensemble accessoire (10) selon l'une quelconque des revendications précédentes et au moins un contenant pour aliments ou boissons (20) auquel l'ensemble accessoire (10) est fixé.

11. Emballage (100) selon la revendication 10, dans lequel les contenants pour aliments ou boissons sont configurés par un couvercle souple suremballant l'ensemble accessoire (10) dans sa totalité, à l'exception de la partie de celui-ci en communication avec le volume intérieur du ou des contenants pour aliments ou boissons.

12. Emballage (100) selon l'une quelconque des revendications 10 et 11, comprenant en outre des moyens d'identification avec les informations pour le traitement des ingrédients à l'intérieur du ou de la pluralité de contenants (20) telles que la température, le débit et/ou le volume du fluide introduit, le temps de préparation, la séquence des mouvements des parties dans l'ensemble accessoire (10), par exemple.

13. Machine pour la préparation d'un produit alimentaire ou de boisson à partir d'un emballage (100) selon l'une quelconque des revendications 10 à 12, la machine comprenant des moyens conçus pour venir en prise avec l'ensemble accessoire (10) et injecter un fluide à travers l'au moins une entrée de fluide et des moyens pour venir en prise avec l'au moins un trou de positionnement.

14. Machine selon la revendication 13, dans laquelle les moyens venant en prise avec l'au moins une entrée de fluide et/ou les moyens venant en prise avec l'au moins un trou de positionnement sont configurés pour déplacer les deux parties de l'ensemble accessoire l'une par rapport à l'autre.

15. Machine selon l'une quelconque des revendications 13 et 14, configurée pour recevoir un emballage (100) selon l'une quelconque des revendications 10 à 12 dans une position essentiellement verticale, en y injectant du fluide dans une direction ascendante.

16. Machine selon l'une quelconque des revendications 13 à 15, comprenant en outre des moyens de commande pour commander le traitement des ingrédients à l'intérieur du ou de la pluralité de contenants (20) tel que la température, le débit et/ou le volume du fluide introduit, le temps de préparation, la séquence de mouvements des parties dans l'ensemble accessoire (10), par exemple.
